# FASCICULE DE BREVET EUROPEEN

(11) **EP 3 519 958 B1**
(45) Date de publication et mention de la délivrance du brevet: **08.11.2023**
(21) Numéro de dépôt: 17784374.5
(22) Date de dépôt: 29.09.2017
(51) Int. Cl.: G06F 9/50

(54) **PROCÉDÉ D'AUDIT D'UNE RESSOURCE VIRTUALISÉE DÉPLOYÉE DANS UN RÉSEAU INFORMATIQUE EN NUAGE**
VERFAHREN ZUR PRÜFUNG EINER VIRTUALISIERTEN RESSOURCEN IN EINEM CLOUD-RECHNERNETZWERK
METHOD FOR AUDITING A VIRTUALISED RESOURCE DEPLOYED IN A CLOUD COMPUTING NETWORK

(30) Priorité: 03.10.2016 FR 1659523
(43) Date de publication de la demande: 07.08.2019
(73) Titulaire: Orange, 92130 Issy-les-Moulineaux (FR)
(72) Inventeur: BIHANNIC, Nicolas, 92326 Châtillon Cedex (FR); FROMENTOUX, Gaël, 92326 Châtillon Cedex (FR); STEPHAN, Emile, 92326 Châtillon Cedex (FR)
(86) Numéro de dépôt international: PCT/FR2017/052682
(87) Numéro de publication internationale: WO 2018/065705

(56) Documents cités:
- WO-A1-2014/182900
- WO-A1-2016/060597
- US-A1- 2009 288 084
- US-A1- 2012 311 344

## Description

### 1. Domaine de l'invention

L'invention se situe dans le domaine des architectures virtualisées de réseaux de télécommunications et dans le domaine de l'informatique en nuage. La virtualisation d'architectures, composées de fonctions réseaux, consiste à mettre en oeuvre des fonctions logicielles réseau fonctionnant sur du matériel informatique générique (systèmes d'exploitation non spécifiques).

### 2. Etat de la technique antérieure

Les réseaux de télécommunications sont l'objet d'évolutions majeures impactant de façon considérable aussi bien leur déploiement que leur gestion.
La virtualisation des architectures constitue probablement l'une des ruptures technologiques la plus déterminante. La virtualisation des fonctions d'adressage, de nommage, de routage notamment ainsi que le rapprochement des réseaux et du monde informatique impactent très fortement le métier des opérateurs, l'administration des réseaux et les interactions entre les opérateurs et les partenaires que sont les fournisseurs d'équipements, les fournisseurs de services ainsi que les clients. Les architectures et l'exploitation de ces réseaux par les opérateurs doivent également prendre en compte cette évolution des réseaux, notamment pour tirer parti au mieux des avantages que présente la virtualisation des réseaux. Notamment, la virtualisation permet une plus grande flexibilité permettant de répondre de façon plus réactive à de nouvelles offres et à des évolutions de trafic. La virtualisation des fonctions repose sur le déploiement d'équipements de préférence banalisés, c'est-à-dire basés sur des systèmes d'exploitation non spécifiques, permettant ainsi de faire baisser les coûts. Ces équipements sont généralement déployés au sein de centre de données (en anglais data centers) qui pourront être plutôt centralisés, donc éloignés des réseaux d'accès des clients, ou distribués, donc plus près des clients. Ce choix entre déploiement centralisé et déploiement distribué est effectué en fonction notamment des besoins en termes de latence et d'accessibilité de ces fonctions. Les travaux de standardisation autour de la convergence des techniques utilisées dans les réseaux de télécommunications d'une part et les techniques du monde informatique sont discutés au sein du groupe NFV (en anglais Network Function Virtualization) de l'ETSI (en anglais European Télécommunications Standards Institute).

La mise en oeuvre d'un service réseau ou Network Service en anglais repose sur le déploiement de plusieurs fonctions virtuelles (VNF (en anglais Virtualized Network funtions)). Un service réseau est par exemple un service de CPE (en anglais Customer Premises Equipment) virtuel ou bien un service de réseau privé virtuel tandis qu'une fonction virtuelle VNF est par exemple une fonction NAT (en anglais Network Address Translation), une fonction HSS (en anglais Home Subscriber Service), une fonction DPI (en anglais Deep Packet Inspection) ou toute autre fonction utilisée pour le déploiement de service réseau. Un service réseau repose sur le déploiement de plusieurs fonctions virtuelles qui sont interconnectées.

Une architecture NFV est mise en oeuvre de la façon suivante. Un système de management envoie une demande de mise en oeuvre de service réseau à une fonction d'orchestrateur. Sur la base de cette demande, l'orchestrateur transmet une requête d'instanciation à un gestionnaire de l'infrastructure. Ce gestionnaire met en oeuvre les VNFs en respectant un descripteur qui précise les conditions à respecter pour le déploiement et la gestion de ces VNFs. Selon la terminologie ETSI/NFV, le système de management est un OSS/BSS (en anglais Operations Support System/Business Support System), l'orchestrateur est un VIM (en anglais Virtualized Infrastructure Manager). La flexibilité concernant la localisation des VNFs pour la mise en oeuvre d'un service réseau est assez large et celles-ci peuvent par exemple être localisées dans des centres de données (en anglais data centers) plutôt localisés ou distribués au sein de l'infrastructure. L'infrastructure virtualisée au sein de laquelle sont déployées les VNFs est une infrastructure mutualisée accueillant différents types de VNFs, afin de proposer une variété de services réseaux pour des clientèles variées. Cette mutualisation assure une meilleure flexibilité, grâce à la possibilité de rajouter des VNFs si besoin, et cela assure une meilleure maîtrise des coûts sachant qu'une unique infrastructure permet de satisfaire plusieurs services.

Cette flexibilité et cette mutualisation apportent néanmoins de nouvelles contraintes pour l'opérateur, notamment par rapport aux partenaires, clients et fournisseurs. Les caractéristiques inhérentes aux services réseaux, notamment en termes de sécurité et de qualité de service, sont contraignantes et il est indispensable au moins de les maintenir et si possible de les améliorer lorsque la virtualisation des fonctions est choisie et mise en oeuvre au détriment d'une architecture basée sur le déploiement d'équipements physiques spécifiques. Les relations entre les opérateurs et leurs partenaires sont également impactées par le développement d'architectures virtualisées. Notamment, le respect des engagements contractuels ou SLAs (en anglais Service Level Agreement) de l'opérateur avec les partenaires, fournisseurs est crucial. Notamment, le fournisseur de VNF doit pouvoir s'assurer que la VNF a été déployée selon les paramètres du descripteur. Un fournisseur de service doit pouvoir avoir l'assurance que les services qu'il propose à ses clients ou qu'il met en oeuvre pour ses propres besoins sont instanciés selon le contrat signé avec l'opérateur, celui-ci s'engageant sur une certaine qualité de service. Le régulateur, dans les pays où un tel régulateur veut notamment d'assurer des règles de concurrence ou du respect de certaines conditions de sécurité, doit également pouvoir s'assurer de la bonne mise en oeuvre des services conformément à un cahier des charges préalablement édité. Cela lui permet de s'assurer notamment que le service est conforme à ses exigences.

Les VNFs étant mises en oeuvre par l'opérateur, il n'existe pas de possibilité pour des entités externes de contrôler que celles-ci sont déployées conformément à ce qui est indiqué dans le descripteur ou de vérifier que les services réseaux déployés à partir d'un chaînage de VNFs est conforme à ce qui est contractualisé entre l'opérateur et le fournisseur de services. L'entité externe, telle que la régulateur, ne peut non plus s'assurer du respect de certaines règles ou de la bonne mise en oeuvre d'un service voire d'une fonction spécifique.

La demande de brevet US 2012/311344 A1 divulgue des techniques d'audit de sécurité des ressources cloud.

La demande de brevet WO 2016/060597 A1 divulgue un procédé de configuration d'interception légale d'une fonction d'interception interne dans lequel une architecture NFV crée un cadre architectural réseau unique pour la virtualisation des fonctions réseau. L'architecture NFV est facilement mappée à la plupart des infrastructures cloud réelles et des fonctions virtualisées.

La présente invention a pour objet de remédier à ces inconvénients.

### 3. Exposé de l'invention

Selon un premier aspect, le procédé d'audit d'au moins une ressource virtualisée déployée dans un réseau informatique en nuage, mis en oeuvre par un dispositif d'administration de l'au moins une dite ressource, apte à administrer des fonctions de réseaux virtuelles VNF, l'infrastructure virtuelle NFVI ou les services réseaux OSS/BSS, le procédé comprenant:
- une étape de mémorisation d'un ensemble de règles de l'audit associées à l'au moins une ressource virtualisée,
- une étape de réception depuis l'au moins une ressource virtualisée d'un message comprenant une information sur un événement survenant sur ladite ressource virtualisée,
- une étape de corrélation de l'information reçue avec l'ensemble de règles mémorisées,
- si la corrélation est positive, une étape d'envoi, à un dispositif d'enregistrement, d'un message de commande d'écriture d'au moins une donnée liée à l'information reçue dans un registre de données associé à l'au moins une ressource virtualisée.

La vérification qu'une ressource virtualisée, telle qu'une fonction de réseau virtualisée (VNF, en anglais Virtual Network Function), un composant d'infrastructure géré par un dispositif d'administration d'infrastructure virtualisé (VIM en anglais Virtualized Infrastructure Manager) ou un service de réseau virtualisé (NS en anglais Network Service) basé sur la mise en oeuvre de plusieurs VNF fonctionne tel que prévu dans les spécifications et dans les règles d'ingénierie est un des challenges que les opérateurs de réseau, les fournisseurs de VNFs et les fournisseurs de NS doivent mener à bien.

Un dispositif d'administration, déployé par l'opérateur par exemple dans une infrastructure basée sur un réseau informatique en nuage (aussi appelée Cloud en anglais), permet de gérer une ou plusieurs ressources virtualisées pour laquelle (lesquelles) on souhaite s'assurer que le fonctionnement respecte des conditions préalablement fixées dites conditions nominales, celles-ci étant présentes dans un document d'ingénierie ou un document de spécifications.

Le dispositif d'administration peut être commun aux ressources virtualisées auditées ou, selon les cas, plusieurs dispositifs d'administration sont mis en oeuvre notamment si les ressources virtualisées sont de différents types. Lorsqu'il s'agit d'auditer un service virtualisé, il peut être nécessaire de collecter des informations relatives à l'infrastructure, aux VNFs ainsi qu'au service lui-même.

Les conditions nominales peuvent selon les cas être fixées par un fournisseur de VNFs, un fournisseur de NS, l'opérateur assurant la gestion de l'infrastructure virtualisée voire une entité extérieure, telle qu'une autorité de régulation. Pour ces ressources virtualisées sélectionnées, des paramètres sont sélectionnés pour être particulièrement suivis ou audités. Dans le but de recueillir tous les événements pouvant se produire sur les paramètres de l'infrastructure, des VNFs ou NS sélectionnés, le dispositif d'administration est susceptible d'être mis à jour avec un ensemble de règles. Les règles peuvent par exemple être relatives:
- à la performance, par la configuration de seuils à partir desquels une commande d'écriture d'un message d'alarme peut être émise,
- à l'ingénierie des ressources virtualisées, où le déplacement d'une ressource peut nécessiter l'envoi d'une commande d'écriture,
- à la sécurité, où la version d'un hyperviseur peut nécessiter l'envoi d'une commande d'écriture.

Ces règles ont pour objectif d'assurer un suivi des paramètres qui doivent être audités pendant l'exécution du programme informatique. Dans le cas où le suivi porte sur un NS s'appuyant sur plusieurs VNFs voire sur l'interconnexion entre ces VNFs, le suivi des données du NS peut nécessiter le suivi de données se produisant sur les différentes VNFs et les interconnexions.

Lorsqu'un événement, tel qu'une modification d'une disponibilité d'interface ou un engorgement d'un lien ou tout autre type d'événement, survient sur une ressource virtualisée, le dispositif d'administration en est notifié et effectue une corrélation entre l'événement survenant sur la ressource virtualisée et les paramètres de la ressource audités, par exemple grâce à un programme informatique lié à l'audit. Dans le cas où l'événement correspond à un des paramètres audités, le dispositif d'administration commande l'écriture d'une information liée à l'événement dans un registre. Le dispositif d'administration assurant l'écriture dans un registre est le plus souvent assuré par une entité spécifique telle qu'une entité de minage (Miner en anglais). La sélection de l'entité de minage en charge de l'écriture de l'événement peut être réalisée par configuration, typiquement en utilisant un processus aléatoire ou bien en utilisant un processus de permutation circulaire (aussi appelé round-robin en anglais). Le registre utilisé pour l'écriture des informations peut être spécifique à la ressource virtualisée ou bien lié à l'architecture virtualisée voire à l'opérateur. Ainsi les différents événements impactant une ressource virtualisée seront présents dans le registre, grâce à la commande d'écriture envoyée par le dispositif d'administration aux entités de minage et pourront être accessibles par toute entité ayant des droits en lecture sur ces registres, telle que par exemple une entité fournissant le service audité à des clients ou une entité assurant la fourniture de la VNF. Ce registre assure ainsi la traçabilité des événements survenant sur une ressource virtualisée et permet de pouvoir tracer des événements impactant une ressource d'un réseau. Le registre peut par exemple être utilisé pour constater un dysfonctionnement d'une fonction réseau (routage, nommage, sécurité...) ou bien l'évolution d'une offre de services dans le temps. C'est également un procédé utile à l'administration d'un réseau pour l'opérateur de ce réseau.

Selon une caractéristique particulière, le procédé d'audit comprend en outre une étape de réservation de ressources, comprenant des capacités de stockage et de traitement, dans le dispositif d'administration en fonction des règles d'audit à mémoriser.

Le procédé d'audit nécessite des ressources supplémentaires dans le dispositif d'administration d'une part pour mémoriser l'ensemble de règles mais aussi pour gérer les informations reçues de la ressource virtualisée ainsi que la corrélation à effectuer. Le dispositif d'administration, notamment s'il est en charge de plusieurs ressources virtualisées, est susceptible de se trouver en limite de capacités pour pouvoir mener à bien le procédé d'audit. Un manque de ressources est susceptible de rendre le procédé d'audit inopérant car le dispositif d'administration serait dans l'incapacité de traiter les informations liées aux événements, des commandes d'écriture. La réservation de ressources dans le dispositif d'administration permet de s'assurer que ce dispositif va disposer des ressources nécessaires pour l'audit et que ces ressources ne sont pas allouées à un autre processus du dispositif d'administration. Le procédé de réservation de ressources peut consister par exemple à réserver de l'espace mémoire dans le dispositif d'administration ou une ressource virtuelle, comprenant des capacités de stockage et de traitement, si le dispositif d'administration est lui-même virtualisé.

Selon une caractéristique particulière, l'étape de mémorisation d'un ensemble de règles associées à l'au moins une ressource virtualisée du procédé d'audit est précédée d'une étape d'obtention dudit ensemble depuis un dispositif de gestion du réseau unique.

Les différents dispositifs d'administration intervenant dans l'audit de la ressource virtualisée doivent être configurés avec un ensemble de règles liées à l'audit. Notamment dans le cas où plusieurs dispositifs d'administration interviennent dans l'audit, il est nécessaire d'assurer une cohérence des règles configurées pour que les données présentes dans le registre soient effectivement suffisamment complètes et cohérentes. La mise en oeuvre de cette cohérence et de cette complétude peut avantageusement être assurée par une configuration des règles dans un dispositif de gestion du réseau unique qui transmet ensuite les règles relatives à chaque dispositif d'administration intervenant dans l'audit. Ainsi, l'entité en charge du réseau informatique en nuage configure l'ensemble de règles dans le dispositif de gestion qui transmet ensuite les règles aux dispositifs d'administration. L'entité de gestion peut être un système de management OSS/BSS (en anglais Operations Support System/Business Support System) ou bien un dispositif de type NFVO (en anglais Network Function Virtualization Orchestration) défini dans le document ETSI GS NFV-MAN 001 V1.1.1 (2014-12).

Selon une caractéristique particulière, le message de commande d'écriture comprend une information liée aux droits de lecture de ladite donnée.

Les données à enregistrer dans le registre de données peuvent être de différents types. Certaines données peuvent être considérées comme confidentielles et l'opérateur du réseau informatique en nuage dans lequel est déployée la ressource virtualisée souhaite que la donnée d'audit ne soit pas lue par une autre entité. Dans ce cas, la commande d'écriture de la donnée comprend un paramètre permettant d'indiquer que la donnée concernée par la commande peut ou ne peut pas être accessible par une autre entité ou d'indiquer quelles entités sont autorisées à y accéder. L'information liée aux droits de lecture peut notamment être utilisée lorsque l'audit est effectué suite à un contrat passé entre l'opérateur du réseau informatique en nuage et une autre entité. Le contrat peut stipuler que certains paramètres sont audités et que le registre lié à l'audit, mis à disposition de l'entité avec laquelle est signé le contrat, contiendra les données liées à ces paramètres conformément au contrat. L'opérateur du réseau peut cependant décider d'auditer certains paramètres pour ses besoins propres et dans ce cas-là ne met pas les droits de lecture pour ces paramètres, empêchant ainsi l'autre entité d'accéder à ceux-ci.

Selon une caractéristique particulière, l'ensemble de règles associées à l'au moins une ressource virtualisée comprend des paramètres relatifs à la disponibilité et à la performance de la ressource virtualisée.

Parmi les données à faire enregistrer dans un registre, les informations liées à la disponibilité et à la performance de la ressource virtualisée sont particulièrement importantes. Dans une architecture de réseau informatique en nuage, les ressources virtualisées peuvent être activées à la demande et être déployées dans des centres de données (également appelés Datacenters en anglais) distants. Une information de non disponibilité d'une ressource virtualisée transmise par le dispositif d'administration revêt un caractère essentiel car il est alors nécessaire de prévoir son remplacement. Dans le cas où le registre collectant les données d'audit est utilisé par un dispositif de gestion du réseau informatique en nuage, cette information de non disponibilité ou de problème de performance doit être prise en compte pour mettre en oeuvre une solution permettant de pallier au problème rencontré. Il peut s'agir par exemple de déployer une nouvelle ressource virtualisée ou d'allouer de l'espace mémoire à des ressources virtualisées existantes. Ces informations relatives à la performance permettent aussi par exemple aux fournisseurs de VNF d'améliorer le design de leurs solutions.

Selon une caractéristique particulière, la commande d'écriture dans un registre de données associé à l'au moins une ressource virtualisée est envoyée en différé.

Le dispositif d'administration, lorsqu'il mémorise un nombre important de règles et qu'un nombre conséquent de données sont à enregistrer dans le registre, cela est susceptible de générer un nombre de messages de commande d'écriture important à destination du registre. Ces commandes peuvent intervenir lorsque le réseau est fortement chargé. L'envoi de ces messages est de nature à impacter la disponibilité du réseau et la qualité des services s'appuyant sur le réseau en question. Des données d'audit n'ont pas nécessairement besoin d'être enregistrées en temps réel dans le registre. Il peut donc être intéressant d'envoyer des messages de commande d'écriture en différé, de façon à ne pas surcharger le réseau avec ces messages et le laisser disponible par exemple pour des services à valeur ajoutée. Cette propriété d'écriture en différé peut être une des règles reçues à l'étape de mémorisation.

Selon une caractéristique particulière, l'étape d'envoi est précédée d'une étape de sélection du dispositif d'enregistrement auquel est envoyée l'information.

Les dispositifs d'enregistrement jouent un rôle important dans la mise à jour des registres. L'écriture des données dans les registres est très souvent effectuée en respectant des caractéristiques de sécurité. Celles-ci permettent d'une part de réserver la fonction d'écriture à des dispositifs d'enregistrement, qualifiés en termes de ressources et de profils et d'autre part d'éviter que les registres puissent être mis à jour par des dispositifs d'enregistrement non autorisés. Dans certaines situations, ces dispositifs d'enregistrement sont gérés par des entités différentes. Afin d'éviter tout problème de fiabilité des données écrites, il convient d'éviter qu'un même dispositif d'enregistrement écrive toutes les données d'un audit. Un moyen pour répartir la tâche d'écriture entre plusieurs dispositifs d'enregistrement est de mettre en place une étape de sélection du dispositif d'enregistrement à qui sera envoyée la commande d'écriture. Ainsi, le dispositif d'administration peut sélectionner, selon un algorithme qui lui est propre ou selon un algorithme mis en oeuvre par une entité de gestion du réseau informatique en nuage, un dispositif d'enregistrement selon le mode de sélection retenu.

Selon une caractéristique particulière, l'étape de sélection d'un dispositif d'enregistrement est fonction de l'information reçue dans le message émis par la ressource virtualisée.

La sélection du dispositif d'enregistrement peut avantageusement être effectuée en tenant compte de l'information reçue de la ressource virtualisée. Si plusieurs audits sont mis en oeuvre, de façon concurrente, sur un réseau informatique en nuage et que ces différents audits sont définis dans des accords signés entre l'entité en charge du réseau informatique et des entités différentes, une information reçue de la ressource virtualisée permet la sélection d'un dispositif d'enregistrement en charge d'écrire les données d'un audit en particulier. Cette information peut aussi permettre au module de corrélation de sélectionner avantageusement la ou les corrélations à effectuer avec les règles mémorisées.

Par exemple, la ressource virtualisée peut indiquer une identité ou bien donner une information sur le type de trafic relatif à l'information transmise, de façon que le dispositif d'administration puisse transmettre la commande d'enregistrement au dispositif d'enregistrement adéquat.

Selon un deuxième aspect, l'invention concerne un dispositif d'administration d'au moins une ressource virtualisée, apte à mettre en oeuvre un procédé d'audit de l'au moins une ressource virtualisée déployée dans un réseau informatique en nuage, caractérisé en ce qu'il comprend :
- un module de mémorisation d'un ensemble de règles associées à l'au moins une ressource virtualisée,
- un récepteur depuis l'au moins une ressource virtualisée d'un message comprenant une information sur un événement survenant sur ladite ressource virtualisée,
- un module de corrélation de l'information reçue avec l'ensemble de règles mémorisées,
- un émetteur d'un message de commande d'écriture d'au moins une donnée liée à l'information dans un registre de données associé à l'au moins une ressource virtualisée.

Selon une caractéristique particulière, le dispositif d'administration comprend en outre un module de sélection d'un dispositif d'enregistrement auquel est émis le message de commande d'écriture.

Selon un troisième aspect l'invention concerne un système d'audit d'au moins une ressource virtualisée comprenant :
- au moins un dispositif d'administration,
- au moins une ressource virtualisée,
- au moins un dispositif d'enregistrement comprenant :
   - un récepteur de message de commande d'écriture d'au moins une donnée,
   - un module d'écriture de la dite donné dans un registre,
- au moins un registre de données.

Selon un quatrième aspect, l'invention concerne également un programme d'audit d'une ressource virtualisée, caractérisé en ce qu'il comprend des instructions pour la mise en oeuvre des étapes du procédé d'audit, lorsque ledit programme est exécuté par un processeur.

Selon un cinquième aspect, l'invention concerne également un support d'enregistrement lisible par un dispositif d'administration sur lequel est enregistré le programme.

### 4. Description détaillée d'au moins un mode de réalisation de l'invention

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
La **figure 1** présente de façon schématique un réseau informatique en nuage, comprenant des ressources virtualisées.
La **figure 2** présente une vue logique d'une architecture d'audit dans laquelle sont représentées des ressources intervenant dans le procédé ;
La **figure 3** décrit les différentes étapes du procédé d'audit de deux fonctions virtuelles, selon un aspect de l'invention ;
La **figure 4** décrit les différentes étapes du procédé d'audit d'un service virtualisé, celui-ci étant basé sur la mise en oeuvre de plusieurs ressources virtualisées, selon un aspect de l'invention.
La **figure 5** représente une structure d'un dispositif d'administration apte à mettre en oeuvre un procédé d'audit, qui est basé sur la mise à jour d'un registre associé à l'audit.

Dans la suite de la description, va être décrit un mode de réalisation du procédé d'audit, basé sur la mise à jour d'un registre associé à l'audit selon l'invention.

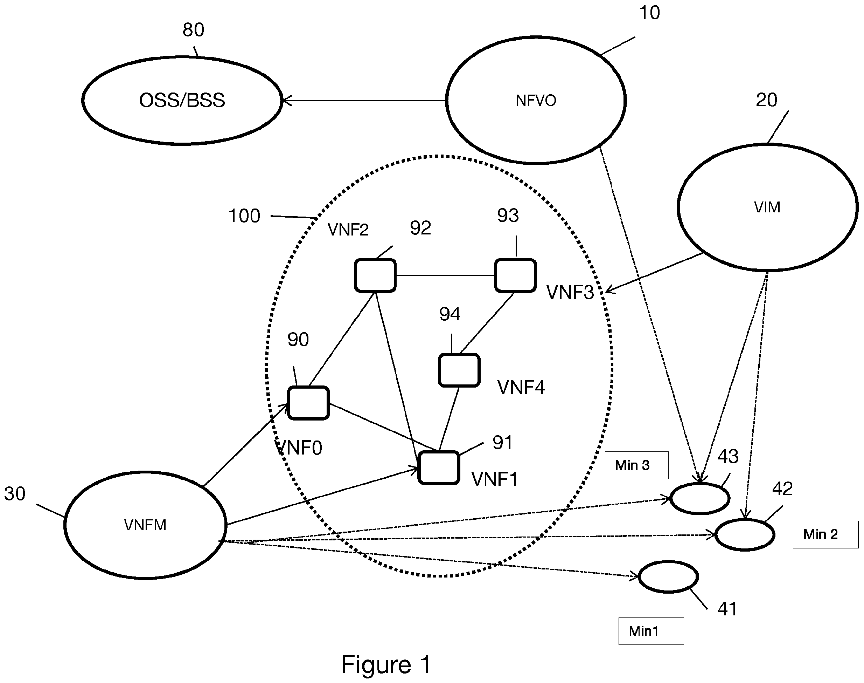

On se réfère tout d'abord à la **figure 1** qui présente, selon l'art antérieur, de façon schématique un réseau informatique en nuage, comprenant des ressources virtualisées. Cette figure s'inspire de la spécification décrite dans le document ETSI GS NFV 002 (version Octobre 2013). Sur cette figure, le réseau informatique en nuage comprend des fonctions virtuelles VNF0 90, VNF1 91, VNF2 92, VNF3 93, VNF4 94 (en anglais Virtual Network Function). Le nombre de ces fonctions virtuelles dans le réseau n'est pas limité. Les fonctions supportées par ces VNF peuvent être des fonctions de routage, de nommage, d'adressage, de sécurité ou toute autre fonction requise dans le réseau informatique en nuage. Ces fonctions virtuelles sont déployées sur une infrastructure de réseau informatique en nuage (ou Cloud en Anglais) 100 composé de ressources matérielles utilisées pour le stockage, le calcul et l'interconnexion. Les fonctions virtuelles sont mises en oeuvre sur ces ressources matérielles en utilisant une couche logicielle de virtualisation. Les services mis en oeuvre sur le réseau comprennent des ressources d'infrastructures ainsi que des fonctions virtuelles. Le service est défini par un chaînage de fonctions virtuelles, les ressources requises en termes de ressources matérielles et par des paramètres liés au service lui-même comprenant des paramètres de disponibilité, de qualité de service, ces paramètres étant gérés dans une entité spécifique telle que le système OSS/BSS 80 (en anglais Operations Service System/Business Support System). Le cycle de vie des fonctions virtuelles est géré par un dispositif d'administration de fonctions virtuelles VNF M 30 (en anglais Virtual Network Function Manager). Sur la figure 1, un seul VNF M est représenté mais il est possible que plusieurs VNF M soient déployés. Une fonction virtuelle peut être gérée par un dispositif d'administration qui lui est propre. Les ressources matérielles, composant l'infrastructure du réseau informatique en nuage, sont gérées par un VIM 20 (en anglais Virtualized Infrastructure Manager). En fonction de l'infrastructure et des ressources mises en oeuvre, plusieurs VIM peuvent être utilisés pour la gestion. Le cycle de vie des services est géré par un NFVO 20 (en anglais Network Function Virtualization Orchestrator). Les services peuvent être gérés par plusieurs NFVO ou dispositifs d'administration équivalents. Aussi bien le VNF M que le VIM et le NFVO peuvent eux même être virtualisés. Des dispositifs d'enregistrement 41, 42, 43 sont également représentés sur la figure 1. Ces dispositifs d'enregistrement ont pour objectif d'écrire des données dans des registres afin que celles-ci soient conservées.

L'écriture des données dans les registres est notamment utilisée dans les technologies de chaînes de blocs où les dispositifs d'enregistrement assurent l'enregistrement des transactions, les chaînes de blocs étant à l'origine utilisées pour des transactions financières, dans des blocs ajoutés régulièrement à une chaîne de blocs. Les dispositifs d'enregistrement, aussi appelés mineurs, doivent utiliser des moyens sécurisés pour garantir à la fois l'enregistrement et la véracité des données enregistrées. Cette exactitude des données est réalisée à partir d'une méthode de consensus où les mineurs créent une succession de blocs, formant le registre, chaînés entre eux. La méthode de consensus vise à certifier l'intégrité de chaque bloc qui sera ajouté à la chaîne de blocs. Des moyens sécurisés permettent d'éviter qu'une entité écrive dans les registres sans y être autorisé. Le nombre de mineurs n'est pas limité et les ordres d'écriture par mineur ne sont pas a priori définis et sont liés aux commandes d'écriture reçues. Les mineurs ne sont pas nécessairement tous gérés par l'entité en charge du réseau informatique en nuage. Pour certains services, il est même recommandé d'éviter le contrôle de tous les mineurs par une seule entité. Les mineurs peuvent en outre assurer l'enregistrement de données relatives à plusieurs services mis en oeuvre par une seule entité ou des entités différentes.

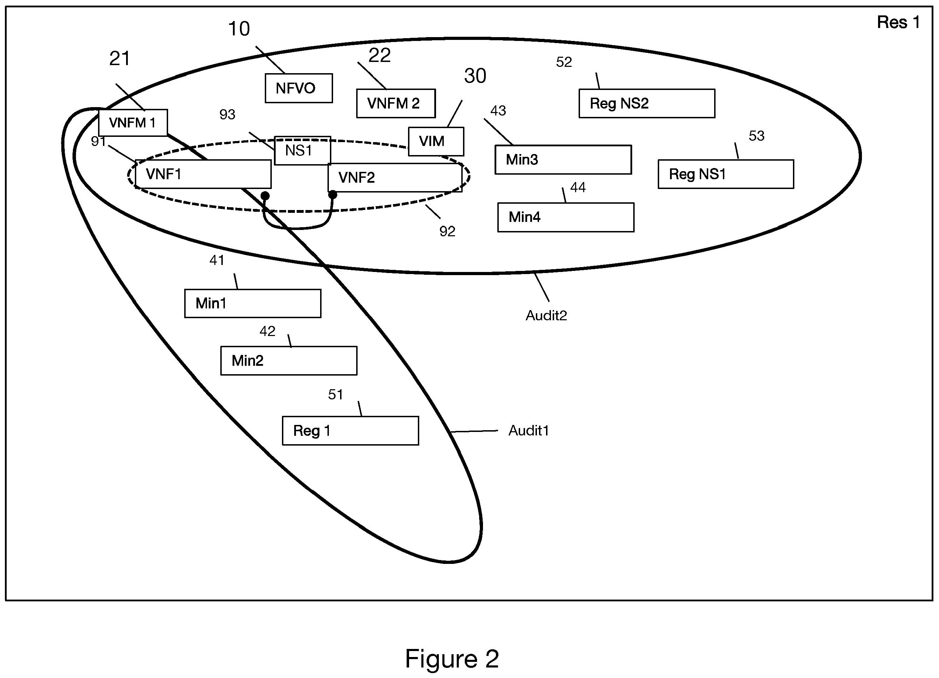

On se réfère maintenant à la **figure 2** qui présente une vue logique d'une architecture d'audit, selon l'invention, dans laquelle sont représentés des ressources intervenant dans le procédé. Dans cette figure, deux procédés d'audit sont mis en oeuvre. Le premier Audit1 porte sur la VNF1 91 tandis que le second Audit2 porte sur un service identifié NS1 93.

L'audit Audit1 ne portant que sur une ressource virtualisée, seules des commandes d'enregistrement émises par le dispositif d'administration de la VNF1 91 sont transmises à un mineur. Il peut être envisagé que des informations liées aux ressources matérielles utilisées par la VNF1 91 soient également transmises aux mineurs par l'intermédiaire du VIM 30, soit directement ou soit via le VNFM1 21, mais dans le cas de figure présenté, il est considéré que seul le VNFM1 21 qui assure le cycle de vie de la VNF1 91 transmet des informations d'audit à un mineur. Il est considéré que le VNFM1 21 obtient les règles de l'audit. Il peut obtenir ces règles depuis une autre entité, par exemple un dispositif d'administration de type OSS (en anglais Operations Support System) ou par configuration depuis une console d'opérateur ou en chargeant un logiciel comprenant ces règles. La ressource virtualisée VNF1 91 transmet régulièrement, durant son cycle de vie, des informations au dispositif d'administration VNFM1 21. Les informations transmises par la VNF1 91 ne sont pas toutes liées à l'audit et peuvent être assez diverses. Notamment, la VNF1 91 peut envoyer des informations liées au trafic qu'elle traite (nombre de paquets reçus, nombre de paquets transmis, volume de données par protocole), aux performances de la VNF1 91 (paquets supprimés, capacité de transmission utilisée, ressource mémoire disponible), à sa disponibilité (indisponibilité, capacité de traitement de trafic). Selon la configuration de la ressource VNF1 91, elle envoie tout ou une partie de ces informations au dispositif d'administration VNFM1 21. Le VNFM1 21 effectue, lors de la réception de ces données, une corrélation de celles-ci avec les règles d'audit précédemment obtenues. Si l'audit porte par exemple sur le trafic traité par la VNF1 91, le VNFM1 21 ne retient alors que les données liées au trafic pour transmettre la commande dans l'étape suivante. Dans le cas où plusieurs audits sont menés concurremment, le VNFM1 21 effectue la corrélation des données en fonction des règles liées à chaque audit. Si un deuxième audit porte par exemple sur la disponibilité, il extraie alors les données liées à la performance pour cet audit spécifique. Il est considéré dans cette description qu'un seul audit est mené sur la ressource VNF1 91.

Une fois la corrélation effectuée, le dispositif d'administration VNFM1 21 envoie une commande d'enregistrement à un mineur. Cette commande comprend une donnée liée à l'information retenue dans le processus de corrélation. Selon le mode de réalisation retenu, le VNFM1 21 peut transmettre toute l'information reçue de la ressource VNF1 91 et correspondant effectivement aux règles de l'audit ou bien seulement une partie de l'information voire une donnée établie à partir de l'information reçue. Par exemple, s'il s'agit d'un audit sur le trafic, plutôt que d'envoyer le volume de données par protocole, le VNFM1 21 peut envoyer un ratio du volume de données pour un protocole par rapport au volume de données total. Dans le cas où aucune information reçue de la VNF1 91 ne correspond à aucune des règles d'audit, le VNFM1 21 n'envoie aucune commande liée à cette information au mineur. Le choix du mineur auquel est envoyée la commande d'enregistrement peut être effectué suivant différentes options. Un mineur ou un ensemble de mineurs peut être affecté par audit ou pour l'ensemble des audits mené sur une ressource VNF donnée. Par configuration, le VNFM1 21 sollicitera ce mineur ou cet ensemble de mineurs. S'il s'agit d'un ensemble de mineurs, des fonctions de répartition de charge peuvent être mis en oeuvre. Un procédé de sélection d'un mineur, basé par exemple sur la donnée transmise dans la commande d'enregistrement, peut également être mis en oeuvre.

Une fois que le mineur a reçu la commande d'enregistrement, il écrit la donnée contenue dans le message de commande dans un registre en utilisant les moyens de sécurité liée à l'enregistrement. Il peut exister un registre par audit ou bien un registre collectant les données de plusieurs audits voire de plusieurs services nécessitant l'enregistrement de transactions.

Le second audit représenté sur la figure 2 est effectué sur un service identifié NS1 93. Le service NS1 93 s'appuie sur la VNF1 91 supervisée par le VNFM1 21 et la ressource VNF2 92 supervisée par le dispositif d'administration VNFM2 22, ainsi que sur les ressources matérielles gérées par le VIM 20 et des services gérés par le NFVO 10. Des événements survenant sur les ressources virtualisées gérées par les VNFM, le VIM et le NFVO sont susceptibles de générer des écritures dans le registre associé à l'audit du service NS 1. Les entités VNFM, VIM et NFVO sont configurées avec les règles liées à l'audit du service NS1 93. L'ensemble des règles peut être commun à toutes les entités ou bien, dans un autre mode de réalisation, les règles peuvent être spécifiques à chaque entité, en fonction des événements et des données à enregistrer dans le registre. Durant le cycle de vie du service NS1 93, des informations liées aux événements se produisant sur les VNFs, sur les ressources matérielles de l'infrastructure et liées à la mise en oeuvre du service sont transmises aux dispositifs d'administration. Par exemple, les VNFs sont susceptibles de transmettre aux VNFM des informations liées au trafic qu'ils traitent alors que des informations sur la disponibilité des liens d'interconnexion entre les VNFs sont envoyées au VIM 20. Des informations concernant la qualité de service d'un service de bout en bout sont par exemple envoyées au NFVO. Chaque dispositif d'administration corrèle les informations reçues des ressources virtualisées qu'ils gèrent et décident ou non d'envoyer une commande d'écriture comprenant des informations dont le processus de corrélation a effectivement retenu la pertinence par rapport aux règles de l'audit pour être enregistrées dans le registre lié à l'audit. Les mineurs auxquels les différents dispositifs d'administration envoient les commandes d'écriture peuvent être communs aux ressources virtualisées ou bien spécifiques aux ressources virtualisées en fonction de l'architecture retenue. La particularité d'un audit de service par rapport à un audit de VNF comme décrit dans le premier cas est que plusieurs dispositifs d'administration, relatifs aux types d'événements survenant sur le service, sont impliqués et doivent transmettre des commandes d'enregistrement aux mineurs. Les dispositifs d'administration intervenant dans le processus d'audit peuvent être gérés par des entités différentes. Notamment le service peut être géré par un fournisseur de service, par exemple spécialisé dans la mise en oeuvre de ce service, tandis que l'infrastructure composé des ressources matérielles sont administrées par une autre entité, tel qu'un opérateur de télécommunications. Les VNF et VNFM peuvent être gérées par une troisième entité différente ou non des deux autres.

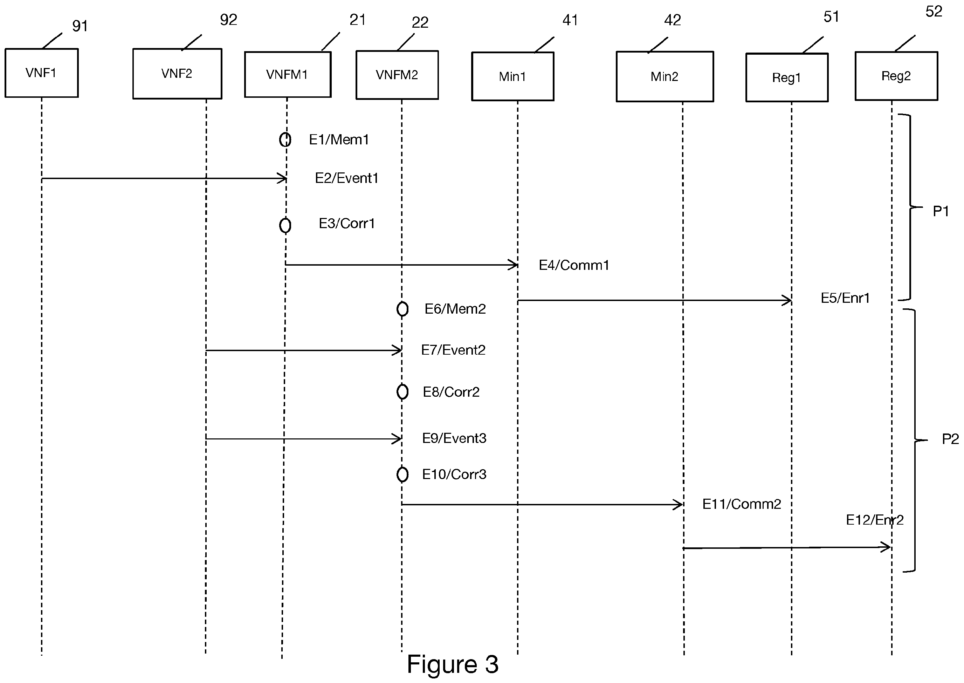

On se réfère maintenant à la **figure 3** **qui** décrit les différentes étapes du procédé d'audit de deux fonctions virtuelles distinctes, VNF1 et VNF2, selon un aspect de l'invention.

Les étapes E1 à E5 de la phase P1 sont relatives à l'audit de la fonction virtuelle VNF1 tandis que les étapes E6 à E12 de la phase P2 sont relatives à l'audit de la VNF2. Lors d'une étape E1, le dispositif d'administration VNFM1 21 de la fonction virtuelle VNF1 91, obtient un ensemble de règles concernant un audit de la fonction VNF1 91. Cet audit peut par exemple être demandé par une autorité de régulation ou le fournisseur de la VNF1 91 pour s'assurer qu'elle fonctionne conformément aux spécifications nominales. L'ensemble de règles serait alors défini dans un contrat signé entre l'entité en charge de la mise en oeuvre de la VNF1 91 dans le réseau et l'entité souhaitant auditer cette ressource virtualisée en particulier. L'étape de mémorisation peut être réalisée par une configuration des règles sur le VNFM1 21 ou en envoyant un message comprenant ces règles depuis une entité d'administration du réseau. Il peut en outre être nécessaire de vérifier au préalable que le VNFM1 21 dispose des ressources nécessaires pour pouvoir effectivement être configuré avec les règles et pour effectuer les traitements en relation avec le procédé de l'audit. Une réservation des ressources nécessaires à l'audit dans le VNFM1 21 peut être réalisée de façon à garantir que les tâches liées à l'audit seront effectivement réalisées, y compris si d'autres processus requérant des ressources dans le VNFM1 21 sont activés en parallèle. Lors d'une étape E2, le VNFM1 21 est notifié par un message Event1 d'un événement survenant sur la fonction virtuelle VNF1 91. Selon la configuration de la ressource VNF1 91, le dispositif d'administration VNFM1 21 peut être notifié dès qu'un événement survient sur la VNF1 91 ou bien la ressource VNF1 91 peut envoyer les notifications à intervalle régulier en groupant les événements survenus entre deux intervalles. Lors d'une étape E3, le VNFM1 21 compare les événements reçus de la part de la VNF1 91 et en déduit les informations qui ont lieu d'être enregistrées dans le cadre de l'audit. Le VNFM1 91, lorsque des événements reçus sont relatifs à l'audit, transmet lors de l'étape E4 un message Comm1 comprenant une commande d'écriture en direction du mineur 41. Le mineur est déterminé à partir d'un algorithme propre au VNFM1 21 ou précisé par exemple dans le contrat lié à l'audit. Lors d'une étape E5, le mineur 41, via un message Enr1, enregistre les données présentes dans la commande d'écriture reçue du VNFM1 21 dans un registre lié à l'audit. Les registres sont des serveurs distincts des mineurs, localisés au sein du réseau informatique en nuage ou hébergés dans des centres de données. L'accès aux données enregistrées dans les registres est sécurisé.

L'audit de la fonction virtuelle VNF2 peut être le même que celui de la phase P1, ou bien différent. S'il s'agit du même audit, l'ensemble de règles mémorisées dans le VNFM1 21 et le VNFM2 22 est identique. C'est le cas par exemple pour la vérification d'une conformité à un hyperviseur, ou logiciel permettant à plusieurs systèmes de cohabiter sur une même machine physique. Le déroulement des étapes de la phase P2 est identique au déroulement des étapes de la phase P1. Les étapes E6, E9, E10, E11, E12 sont respectivement identiques aux étapes E1, E2, E3, E4, E5. Deux étapes supplémentaires sont présentes dans la phase P2. Dans cette phase P2, à la réception d'un événement Event2 lors de l'étape E7, le VNFM2 22, suite à la corrélation Corr2 effectuée lors de l'étape E8 n'envoie pas de message comprenant une commande d'écriture vers un registre car aucun événement ne correspond à une règle obtenue dans un message Mem2 lors de l'étape E6.
Les étapes respectives de mémorisation des règles dans les dispositifs d'administration VNFM1 21 et VNFM2 22 sont mises en oeuvre lors de l'activation du processus d'audit, sauf si ces règles changent lors de la durée de l'audit. Les autres étapes des phases P1 et P2 sont répétées pendant la durée de l'audit, en fonction des événements survenant d'audit définies ci-dessus. Au terme de la durée de l'audit, les règles peuvent être supprimées du VNFM1 21 et VNFM2 22, tout en maintenant les enregistrements E5 et E12.

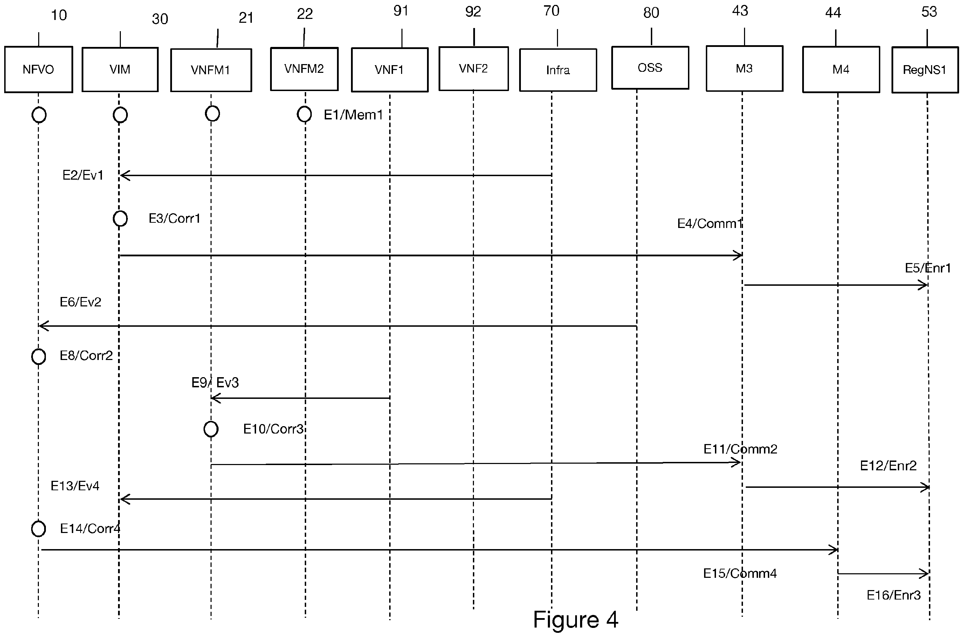

On se réfère maintenant à la **figure 4** qui décrit les différentes étapes du procédé d'audit d'un service virtualisé, par exemple un audit sur la qualité de service d'un service de diffusion vidéo. Cet audit est basé sur la mise en oeuvre de plusieurs ressources virtualisées, selon un aspect de l'invention. Le service virtualisé NS1 est mis en oeuvre à partir de deux fonctions virtuelle VNF1 91 et VNF2 92 respectivement supervisées par les dispositifs d'administration VNFM1 21 et VNFM2 22. Dans un autre mode de réalisation, un seul dispositif d'administration peut superviser ces deux fonctions virtuelles. Les flux de données du service NS1 sont véhiculés sur une infrastructure Infra 70 administrée par un dispositif d'administration VIM 30. Le service est piloté par un système d'exploitation opérationnelle OSS/BSS 80 géré par un dispositif d'administration du cycle de vie des services NFVO 10. L'audit du service NS1 requiert de collecter des informations de service par l'intermédiaire du dispositif d'administration NFVO 10, du dispositif d'administration VIM 30 ainsi que des dispositifs d'administration VNFM1 21 et VNFM2 22. Lors de l'étape E1, les règles de l'audit de NS1 sont mémorisées dans les dispositifs d'administration ayant à corréler des informations de ressources virtualisées pour les envoyer à des dispositifs d'enregistrement. On considère ici que l'ensemble des règles d'audit est commun aux dispositifs d'administration et sont mémorisées en même temps par exemple grâce à un message de configuration transmise par une entité de gestion. Ces dispositifs d'administration dès lors qu'ils reçoivent des événements survenant sur les ressources virtualisées qu'ils supervisent doivent les confronter aux règles de l'audit. Ainsi, lors de l'étape E2, un message Ev1 comprenant un événement sur les ressources liées à l'infrastructure est reçu par le VIM 30. Par exemple, un lien d'interconnexion est à un taux de charge de 80% et cette information est transmise au VIM 30 qui la corrèle aux règles lors de l'étape E3, et la transmet dans un message Comm1 au mineur M3 43 lors de l'étape E4 car cet événement relève bien de l'audit portant sur la qualité de service d'un service de diffusion vidéo. Le mineur 43 assure ensuite l'enregistrement de cette information par un message Enr1 envoyé au registre RegNS1 53 de l'audit lors de l'étape E5. Lors de l'étape E6, le système OSS/BSS 80 notifie par un message Ev2 le dispositif d'administration NFVO 10, par exemple sur la non-disponibilité d'une classe de service pour le service de voix sur IP. A la réception de cette information, le dispositif d'administration NFVO 10 établit, lors de l'étape E8, que cet événement ne relève pas de l'audit et décide donc de ne pas envoyer d'information liée à cet événement à un mineur. Lors de l'étape E9, la fonction virtuelle VNF1 91 transmet un message Ev3 à propos d'un événement lié par exemple au nombre de paquets de flux vidéo reçus sur ses interfaces au dispositif d'administration VNFM1 21. Ce dispositif, à partir des règles d'audit, considère lors de l'étape E10 que cette information relève de l'audit et transmet un message Comm2 au mineur 43 lors de l'étape E11, pour que celui-ci enregistre une donnée issue de l'information contenue dans le message Comm2 dans le registre de l'audit par l'envoi du message Enr2 lors de l'étape E12. A l'étape E13, un événement lié aux ressources matérielles de l'infrastructure 70 indiquant que le lien qui était à 80% de charge est désormais à 90% de charge est transmis au dispositif d'administration VIM 30. Celui-ci, après corrélation avec les règles d'audit lors de l'étape E14, considère qu'il relève bien de l'audit et transmet une commande d'écriture Comm4 au mineur M4 44 lors de l'étape E15. Ce mineur enregistre ensuite l'information liée à cet événement grâce à un message Enr3 envoyé au registre d'audit RegNS1 53 lors de l'étape E16. Le mineur auquel le dispositif d'administration VIM 30 envoie la commande d'écriture est différent du précédent pour éviter qu'un même mineur assure l'enregistrement de toutes les données de l'audit. Il est à noter que les commandes d'enregistrement envoyées par les dispositifs d'administration peuvent comprendre une information liée aux droits de lecture de la donnée comprise dans le message de commande d'écriture. Ceci peut s'avérer particulièrement utile dans le cas où l'audit a été contractualisé avec une autre entité, et que certaines informations ont lieu d'être partagées avec cette entité tandis que d'autres données sont considérées comme confidentielles. En outre, le dispositif d'administration a la possibilité de transmettre une commande d'écriture regroupant plusieurs données précédemment corrélées. Dans ce cas, le dispositif d'administration garde les données jusqu'à ce qu'un message de commande comprenant les données non transmises soit envoyé à un mineur. Ce mode de réalisation permet de limiter le nombre de messages transmis par un dispositif d'administration à un mineur

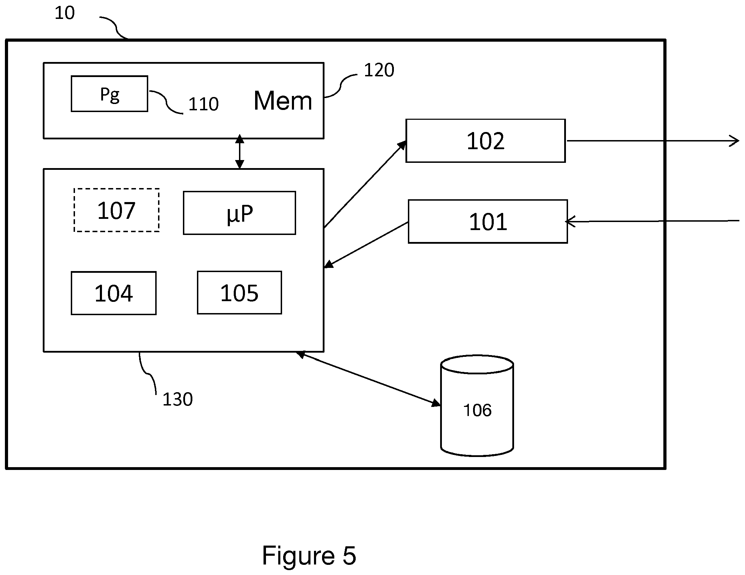

En relation avec la **figure 5****,** on présente maintenant un exemple de structure d'un dispositif d'administration apte à mettre en oeuvre un procédé d'audit, basé sur la mise à jour d'un registre associé à l'audit.

Le dispositif 10 d'administration d'au moins une ressource virtualisée, met en oeuvre le procédé d'audit basé sur la mise à jour d'un registre associé à l'audit, de l'au moins une ressource virtualisée déployée dans un réseau informatique en nuage.

Par exemple, le dispositif 10 d'administration comprend une unité de traitement 130, équipée par exemple d'un microprocesseur µP, et pilotée par un programme d'ordinateur 110, stocké dans une mémoire 120 et mettant en oeuvre le procédé d'audit selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 10 comprend les modules suivants:
- un module de mémorisation 104, apte à mémoriser un ensemble de règles associées à l'au moins une ressource virtualisée,
- un récepteur 101, apte à recevoir un message depuis l'au moins une ressource virtualisée comprenant une information sur un événement survenant sur ladite ressource virtualisée,
- un module de corrélation 105, apte à corréler une information reçue avec l'ensemble de règles mémorisées,
- un émetteur 102, apte à émettre un message de commande d'écriture dans un registre de données associé à l'au moins une ressource virtualisée d'au moins une donnée liée à l'information,
- Une base de données 106 agencée pour conserver les règles liées à au moins un audit.

Optionnellement, dans un autre mode de réalisation, le dispositif d'administration 10 comprend en outre un module de sélection 107, apte à sélectionner un dispositif d'enregistrement en fonction de l'information sur un événement survenant sur une ressource virtualisée, dans le message reçu d'une ressource virtualisée.

Les modules décrits en relation avec la figure 5 peuvent être des modules matériels ou logiciels.

L'invention n'est pas limitée aux exemples de réalisation ci-dessus décrits et représentés, à partir desquels on pourra prévoir d'autres modes et d'autres formes de réalisation, sans pour autant sortir du cadre de l'invention. Le procédé peut notamment être mis en oeuvre dans un environnement où les registres dans lesquels les données d'audit sont enregistrées sont des blocs qui viennent s'ajouter à des chaînes de blocs existantes. La chaîne de blocs ainsi construite au fil du temps contient toutes les données enregistrées par les mineurs au fur et à mesure que l'audit se prolonge. En fonction du type d'audit et notamment de la taille de celui-ci, il pourra s'avérer utile de spécialiser les registres pour des sous parties de l'audit permettant ainsi de limiter la taille des registres et de donner des droits de lecture différents à ces registres dans le cas où une entité externe accède à certaines données de l'audit. Il n'existe pas a priori de limitation quant aux nombres de dispositifs d'administration pouvant intervenir dans un audit donné et ces dispositifs d'administration peuvent également être virtualisés pour être intégrés au réseau informatique en nuage sur lequel les ressources virtualisées sont auditées selon le procédé d'audit décrit. Dans le cas où une ressource virtualisée supporte plusieurs services élémentaires comme par exemple des fonctions de nommage et d'adressage, le procédé d'audit décrit permet de discriminer ces fonctions élémentaires de façon spécifique en identifiant la ressource virtualisée comme la fonction d'adressage ou la fonction de nommage et non pas comme la ressource virtualisée englobant les deux fonctions élémentaires.

## Revendications

1. Procédé d'audit (Audit1, Audit 2) d'au moins une ressource virtualisée (91, 92, 93) déployée dans un réseau informatique en nuage, mis en oeuvre par un dispositif d'administration (10, 21, 22, 30) de l'au moins une dite ressource, apte à administrer des fonctions de réseaux virtuelles VNF, l'infrastructure virtuelle NFVI ou les services réseaux OSS/BSS, le procédé comprenant :
- une étape de mémorisation d'un ensemble de règles permettant l'audit d'un paramètre de l'au moins une ressource virtualisée (91, 92, 93),
- une étape de réception depuis l'au moins une ressource virtualisée (91, 92, 93) d'un message comprenant une information liée au trafic traité, à la disponibilité ou à la performance de ladite ressource virtualisée,
- une étape de corrélation de l'information reçue avec l'ensemble de règles permettant l'audit du paramètre de l'au moins une ressource virtualisée,
- dans le cas où l'information reçue correspond aux règles permettant l'audit du paramètre, une étape d'envoi, à un dispositif d'enregistrement (41, 42, 43, 44), d'un message de commande d'écriture de l'information reçue, dans un registre de données (51, 52, 53) associé à l'au moins une ressource virtualisée (91, 92, 93) et en charge de collecter les informations liées à l'audit du paramètre, le message de commande d'écriture comprenant un paramètre lié aux droits de lecture de ladite information, le paramètre permettant d'indiquer que l'information concernée par la commande peut ou ne peut pas être accessible par une autre entité ou indiquant quelles entités sont autorisées à y accéder.

2. Procédé d'audit, selon la revendication 1, comprenant en outre une étape de réservation de ressources, comprenant des capacités de stockage et de traitement, dans le dispositif d'administration (10, 21, 22, 30) en fonction des règles d'audit à mémoriser.

3. Procédé d'audit, selon la revendication 1 ou la revendication 2, où l'étape de mémorisation de l'ensemble de règles de l'audit d'un paramètre de l'au moins une ressource virtualisée (91, 92, 93) est précédée d'une étape d'obtention dudit ensemble depuis un dispositif de gestion du réseau unique.

4. Procédé d'audit, selon l'une quelconque des revendications 1 à 3, où l'ensemble de règles de l'audit d'un paramètre de l'au moins une ressource virtualisée (91, 92, 93) est relatif à la disponibilité et à la performance de la ressource virtualisée.

5. Procédé d'audit, selon l'une quelconque des revendications 1 à 4, où la commande d'écriture dans un registre de données (51, 52, 53) associé à l'au moins une ressource virtualisée (91, 92, 93) est envoyée en différé.

6. Procédé d'audit, selon l'une quelconque des revendications 1 à 5, où l'étape d'envoi est précédée d'une étape de sélection du dispositif d'enregistrement (41, 42, 43, 44) auquel est envoyée l'information.

7. Procédé d'audit, selon la revendication 6, où l'étape de sélection d'un dispositif d'enregistrement (41, 42, 43, 44) est fonction de l'information reçue dans le message émis par la ressource virtualisée (91, 92, 93).

8. Dispositif d'administration (10, 21, 22, 30) d'au moins une ressource virtualisée (91, 92, 93) apte à mettre en oeuvre un procédé d'audit de l'au moins une ressource virtualisée déployée dans un réseau informatique en nuage, **caractérisé en ce qu'**il comprend :
- un module de mémorisation d'un ensemble de règles permettant l'audit d'un paramètre de l'au moins une ressource virtualisée (91, 92, 93),
- un récepteur d'un message depuis l'au moins une ressource virtualisée comprenant une information liée au trafic traité, à la disponibilité ou à la performance de ladite ressource virtualisée (91, 92, 93),
- un module de corrélation de l'information reçue avec l'ensemble de règles permettant l'audit du paramètre de l'au moins une ressource virtualisée,
- dans le cas où l'information reçue correspond aux règles permettant l'audit du paramètre, un émetteur d'un message de commande d'écriture de l'information reçue
dans un registre de données (51, 52, 53) associé à l'au moins une ressource virtualisée (91, 92, 93, 94) et en charge de collecter les informations liées à l'audit du paramètre, le message de commande d'écriture comprenant un paramètre lié aux droits de lecture de ladite information, le paramètre permettant d'indiquer que l'information concernée par la commande peut ou ne peut pas être accessible par une autre entité ou indiquant quelles entités sont autorisées à y accéder.

9. Dispositif, selon la revendication 8, comprenant en outre un module de sélection d'un dispositif d'enregistrement (41, 42, 43, 44) auquel est émis le message de commande d'écriture.

10. Système d'audit d'au moins une ressource virtualisée comprenant :
- au moins un dispositif d'administration (10, 21, 22, 30), selon la revendication 8 ou la revendication 9 ;
- au moins une ressource virtualisée (91, 92, 93, 94) ;
- au moins un dispositif d'enregistrement (41, 42, 43, 44) comprenant :
- un récepteur de message de commande d'écriture d'au moins une donnée ;
- un module d'écriture de la dite donné dans un registre ;
- au moins un registre de données (51, 52, 53).

11. Programme d'audit d'une ressource virtualisée, **caractérisé en ce qu'**il comprend des instructions pour la mise en oeuvre des étapes du procédé d'audit selon la revendication 1, lorsque ledit programme est exécuté par un processeur.

12. Support d'enregistrement lisible par un dispositif d'administration sur lequel est enregistré le programme selon la revendication 11.

## Patentansprüche

1. Audit-Verfahren (Audit1, Audit2) mindestens einer in einem Cloud-Computing-Netzwerk bereitgestellten virtualisierten Ressource (91, 92, 93), durchgeführt von einer Verwaltungsvorrichtung (10, 21, 22, 30) der mindestens einen Ressource, die fähig ist, virtuelle Netzwerkfunktionen VNF, die virtuelle Infrastruktur NFVI oder die Netzwerkdienste OSS/BSS zu verwalten, wobei das Verfahren enthält:
- einen Schritt des Speicherns einer das Audit eines Parameters der mindestens einen virtualisierten Ressource (91, 92, 93) erlaubenden Reihe von Regeln,
- einen Schritt des Empfangs einer Nachricht von der mindestens einen virtualisierten Ressource (91, 92, 93), die eine mit dem verarbeiteten Verkehr, mit der Verfügbarkeit oder mit der Leistung der virtualisierten Ressource verbundene Information enthält,
- einen Schritt der Korrelation der empfangenen Information mit der das Audit des Parameters der mindestens einen virtualisierten Ressource erlaubenden Reihe von Regeln,
- wenn die empfangene Information den das Audit des Parameters erlaubenden Regeln entspricht, einen Schritt des Sendens, an eine Aufzeichnungsvorrichtung (41, 42, 43, 44), einer Einschreibbefehl-Nachricht der empfangenen Information in ein Datenregister (51, 52, 53), das der mindestens einen virtualisierten Ressource (91, 92, 93) zugeordnet und dafür zuständig ist, die mit dem Audit des Parameters verbundenen Informationen zu sammeln, wobei die Einschreibbefehl-Nachricht einen Parameter enthält, der mit den Leserechten der Information verbunden ist, wobei der Parameter es erlaubt anzuzeigen, dass die vom Befehl betroffene Information für eine andere Entität zugreifbar sein kann oder nicht, oder anzeigt, welche Entitäten berechtigt sind, darauf zuzugreifen.

2. Audit-Verfahren nach Anspruch 1, das außerdem einen Schritt der Reservierung von Speicher- und Verarbeitungskapazitäten enthaltenden Ressourcen in der Verwaltungsvorrichtung (10, 21, 22, 30) abhängig von den zu speichernden Audit-Regeln enthält.

3. Audit-Verfahren nach Anspruch 1 oder Anspruch 2, wobei dem Schritt des Speicherns der Reihe von Regeln des Audits eines Parameters der mindestens einen virtualisierten Ressource (91, 92, 93) ein Schritt des Erhalts der Reihe von einer Managementvorrichtung des einzigen Netzwerks vorausgeht.

4. Audit-Verfahren nach einem der Ansprüche 1 bis 3, wobei die Reihe von Regeln des Audits eines Parameters der mindestens einen virtualisierten Ressource (91, 92, 93) sich auf die Verfügbarkeit und die Leistung der virtualisierten Ressource bezieht.

5. Audit-Verfahren nach einem der Ansprüche 1 bis 4, wobei der Einschreibbefehl in ein der mindestens einen virtualisierten Ressource (91, 92, 93) zugeordnetes Datenregister (51, 52, 53) zeitversetzt gesendet wird.

6. Audit-Verfahren nach einem der Ansprüche 1 bis 5, wobei dem Sendeschritt ein Schritt der Auswahl der Aufzeichnungsvorrichtung (41, 42, 43, 44) vorausgeht, an die die Information gesendet wird.

7. Audit-Verfahren nach Anspruch 6, wobei der Schritt der Auswahl einer Aufzeichnungsvorrichtung (41, 42, 43, 44) von der in der von der virtualisierten Ressource (91, 92, 93) gesendeten Nachricht empfangenen Information abhängt.

8. Verwaltungsvorrichtung (10, 21, 22, 30) mindestens einer virtualisierten Ressource (91, 92, 93), die fähig ist, ein Audit-Verfahren der mindestens einen in einem Cloud-Computing-Netzwerk bereitgestellten virtualisierten Ressource durchzuführen, **dadurch gekennzeichnet, dass** sie enthält:
- ein Speichermodul einer Reihe von Regeln, die das Audit eines Parameters der mindestens einen virtualisierten Ressource (91, 92, 93) erlauben,
- einen Empfänger einer Nachricht von der mindestens einen virtualisierten Ressource, die eine mit dem verarbeiteten Verkehr, mit der Verfügbarkeit oder der Leistung der virtualisierten Ressource (91, 92, 93) verbundene Information enthält,
- ein Korrelationsmodul der empfangenen Information mit der Reihe von Regeln, die das Audit des Parameters der mindestens einen virtualisierten Ressource erlauben,
- wenn die empfangene Information den das Audit des Parameters erlaubenden Regeln entspricht, einen Sender einer Einschreibbefehl-Nachricht der empfangenen Information in ein Datenregister (51, 52, 53), das der mindestens einen virtualisierten Ressource (91, 92, 93) zugeordnet und dafür zuständig ist, die mit dem Audit des Parameters verbundenen Informationen zu sammeln, wobei die Einschreibbefehl-Nachricht einen Parameter enthält, der mit den Leserechten der Information verbunden ist, wobei der Parameter es erlaubt anzuzeigen, dass die vom Befehl betroffene Information für eine andere Entität zugreifbar sein kann oder nicht, oder anzeigt, welche Entitäten berechtigt sind, darauf zuzugreifen.

9. Vorrichtung nach Anspruch 8, die außerdem ein Auswahlmodul einer Aufzeichnungsvorrichtung (41, 42, 43, 44) enthält, an die die Einschreibbefehl-Nachricht gesendet wird.

10. Audit-System mindestens einer virtualisierten Ressource, das enthält:
- mindestens eine Verwaltungsvorrichtung (10, 21, 22, 30) nach Anspruch 8 oder Anspruch 9;
- mindestens eine virtualisierte Ressource (91, 92, 93, 94);
- mindestens eine Aufzeichnungsvorrichtung (41, 42, 43, 44), die enthält:
- einen Empfänger einer Einschreibbefehl-Nachricht mindestens eines Datenwerts;
- ein Einschreibmodul des Datenwerts in ein Register;
- mindestens ein Datenregister (51, 52, 53).

11. Audit-Programm einer virtualisierten Ressource, **dadurch gekennzeichnet, dass** es Anweisungen zur Durchführung der Schritte des Audit-Verfahrens nach Anspruch 1 enthält, wenn das Programm von einem Prozessor ausgeführt wird.

12. Aufzeichnungsträger, der von einer Verwaltungsvorrichtung lesbar ist, auf dem das Programm nach Anspruch 11 gespeichert ist.

## Claims

1. Method for auditing (Audit1, Audit2) at least one virtualized resource (91, 92, 93) deployed in a cloud computing network, implemented by an administration device (10, 21, 22, 30) in respect of the at least one said resource, able to administer VNF virtual network functions, the NFVI virtual infrastructure or the OSS/BSS network services, the method comprising:
- a step of storing a set of rules enabling the audit of a parameter of the at least one virtualized resource (91, 92, 93),
- a step of receiving, from the at least one virtualized resource (91, 92, 93), a message comprising an item of information linked to the processed traffic, to the availability or to the performance of said virtualized resource,
- a step of correlating the received item of information with the set of rules enabling the audit of the parameter of the at least one virtualized resource,
- if the received item of information corresponds to the rules enabling the audit of the parameter, a step of sending, to a recording device (41, 42, 43, 44), a command message for writing the received item of information to a data register (51, 52, 53) associated with the at least one virtualized resource (91, 92, 93) and responsible for collecting the items of information linked to the audit of the parameter, the write command message comprising a parameter linked to the reading rights in respect of said item of information, the parameter making it possible to indicate that the item of information targeted by the command may or may not be accessible to another entity or indicating which entities are authorized to access it.

2. Auditing method according to Claim 1, furthermore comprising a step of reserving resources, comprising storage and processing capabilities, in the administration device (10, 21, 22, 30) as a function of the audit rules to be stored.

3. Auditing method according to Claim 1 or Claim 2, where the step of storing the set of rules of the audit of a parameter of the at least one virtualized resource (91, 92, 93) is preceded by a step of obtaining said set from a single network management device.

4. Auditing method according to any one of Claims 1 to 3, where the set of rules of the audit of a parameter of the at least one virtualized resource (91, 92, 93) relates to the availability and to the performance of the virtualized resource.

5. Auditing method according to any one of Claims 1 to 4, where the command for writing to a data register (51, 52, 53) associated with the at least one virtualized resource (91, 92, 93) is sent later on.

6. Auditing method according to any one of Claims 1 to 5, where the sending step is preceded by a step of selecting the recording device (41, 42, 43, 44) to which the item of information is sent.

7. Auditing method according to Claim 6, where the step of selecting a recording device (41, 42, 43, 44) is dependent on the item of information received in the message sent by the virtualized resource (91, 92, 93).

8. Administration device (10, 21, 22, 30) in respect of at least one virtualized resource (91, 92, 93) able to implement a method for auditing the at least one virtualized resource deployed in a cloud computing network, **characterized in that** it comprises:
- a module for storing a set of rules enabling the audit of a parameter of the at least one virtualized resource (91, 92, 93),
- a receiver for receiving, from the at least one virtualized resource, a message comprising an item of information linked to the processed traffic, to the availability or to the performance of said virtualized resource (91, 92, 93),
- a module for correlating the received item of information with the set of rules enabling the audit of the parameter of the at least one virtualized resource,
- if the received item of information corresponds to the rules enabling the audit of the parameter, a transmitter for sending a command message for writing the received item of information to a data register (51, 52, 53) associated with the at least one virtualized resource (91, 92, 93) and responsible for collecting the items of information linked to the audit of the parameter, the write command message comprising a parameter linked to the reading rights in respect of said item of information, the parameter making it possible to indicate that the item of information targeted by the command may or may not be accessible to another entity or indicating which entities are authorized to access it.

9. Device according to Claim 8, furthermore comprising a module for selecting a recording device (41, 42, 43, 44) to which the write command message is sent.

10. System for auditing at least one virtualized resource comprising:
- at least one administration device (10, 21, 22, 30) according to Claim 8 or Claim 9;
- at least one virtualized resource (91, 92, 93, 94) ;
- at least one recording device (41, 42, 43, 44) comprising:
- a receiver for receiving a command message for writing at least one datum;
- a module for writing said datum to a register;
- at least one data register (51, 52, 53).

11. Program for auditing a virtualized resource, **characterized in that** it comprises instructions for the implementation of the steps of the auditing method according to Claim 1 when said program is executed by a processor.

12. Recording medium able to be read by an administration device and on which the program according to Claim 11 is recorded.
